# EUROPEAN PATENT SPECIFICATION

(11) **EP 3 601 785 B1**
(45) Date of publication and mention of the grant of the patent: **27.10.2021**
(21) Application number: 18715942.1
(22) Date of filing: 29.03.2018
(51) Int. Cl.: F03D 1/06

(54) **COATING**
BESCHICHTUNG
REVÊTEMENT

(30) Priority: 30.03.2017 GB 201705163; 02.11.2017 GB 201718192
(43) Date of publication of application: 05.02.2020
(73) Proprietor: VENTRA LTD, Cowes Isle of Wight PO31 8QQ (GB); Applied Polymer Developments Limited, Newport, Isle of Wight PO30 5XA (GB)
(72) Inventor: NESS, Derek, Newport Isle of Wights PO30 5XA (GB); PARTINGTON, Nick, Newport Isle of Wight PO30 5XA (GB)
(74) Representative: Barker Brettell LLP
(86) International application number: PCT/GB2018/050880
(87) International publication number: WO 2018/178718

(56) References cited:
- EP-A1- 2 247 677
- WO-A1-2015/049260
- US-A1- 2004 220 369
- US-A1- 2015 167 633
- US-A1- 2017 015 862

## Description

The present invention relates to the use of a coating for a substrate, particularly a polyurea protective coating for a wind turbine blade. More precisely, the invention relates to a use according to claim 1, a kit according to claim 9, a method according to claim 12 and a wind turbine blade or part thereof according to claim 15.

Wind turbines are employed to convert kinetic energy from the wind into electrical energy and are an important source of renewable energy. Various designs are available with the most common having three blades attached to a horizontal axis. During operation of a wind turbine, the leading edge of each blade is exposed to wear and tear over time, which results in blade surface deterioration and increased surface roughness. This leads to reduced annual energy production (AEP). As such, periodic in-service repairs are needed to preserve the performance of the turbine, which represents a significant operating cost for wind farms.

Leading edge erosion increases dramatically with increased speed of the blade. As wind turbines increase in size with advancing technology in search of greater efficiencies and return on investment, the blade speed increases and the problem of leading edge erosion becomes more severe. Blade erosion is also highly dependent on extreme environmental conditions, e.g. heavy rains, hail, sandstorm conditions. As wind energy develops out of Europe into emerging markets, blade erosion becomes more significant. Even within Europe, the emerging offshore market is of particular concern, since the maintenance and repair costs associated with rectifying eroded blades are extremely high.

Leading Edge Protection (LEP) products are available. One option is a thermoplastic polyurethane (TPU) self-adhesive tape that is applied to the blades. Despite providing good performance in general, it can suffer from edge delamination which can cause premature failure. Furthermore polyurethane suffers from weathering, such that performance in the field tends to be lower than in laboratory tests.

Another commercially available option is a polyurethane coating system that is applied to the blade. Despite the availability of these products on the market, significant problems exist.

One issue for polyurethane coating systems is a very long process time between application to the blade until the polymer is cured. Curing times of approximately 16-24 hours are required in controlled climate conditions, which necessitate a very large factory footprint to process an economical throughput of blades.

Another issue for polyurethane systems is extreme sensitivity to moisture in the environment: the moisture has adverse effects on the curing reaction and leads to the occurrence of gassing within the coating resulting in an aerated coating or surface defects which will all reduce the performance of the coating in practice (as compared to in the laboratory).

Another issue is durability. Most polyurethane systems are effective for 5 to 10 years whereas modern wind turbine blades have a design life of 20 to 25 years.

The present invention seeks to overcome one or more disadvantages of the prior art systems or to provide an alternative.

According to a first aspect of the present invention there is provided a use according to claim 1.

The coating composition may be derived from a polymerisation reaction between a polyisocyanate resin and a polyamine resin, the polyisocyanate resin comprising one or more aliphatic isocyanate(s) and the polyamine resin comprising two or more aliphatic polyamines having primary and/or secondary amine groups,
wherein the aliphatic polyamines comprise (i) at least one triamine that imparts toughness on the resulting coating and; (ii) at least one diamine that imparts flexibility on the resulting coating.

The coating composition may be derived from a polymerisation reaction between a polyisocyanate resin and a polyamine resin, the polyisocyanate resin comprising one or more aliphatic isocyanate(s) and the polyamine resin comprising two or more aliphatic polyamines having primary and/or secondary amine groups,
wherein the aliphatic polyamines comprise (i) at least one triamine that imparts toughness on the resulting coating and; (ii) at least one diamine that imparts flexibility on the resulting coating.

The coating composition is suitable for coating wind turbine blades, in particular for wind turbine leading edge protection (LEP). The mechanical properties of the polyurea coating are very suitable for this application. These properties may include one or more of the following:
(i) low modulus of elasticity and high strain to failure (necessary for both resisting the high mechanical strains endured by fibre-composite wind turbine blades and also withstanding the pressure wave that is induced in the coating by the impacting high velocity droplets and particles);
(ii)High tensile strength- (necessary to withstand the progress of the pressure wave as it propagates through the coating without generating tensile failure of the coating)
(iii) high toughness and high structural damping (for resisting and dissipating the impact energy impinged by high speed rain droplets, hail, and sand particles);
(iv) good adhesion properties to both epoxy and polyurethane substrates (i.e. typical blade resin systems and paints); and
(v) ease of formulation to resist ultraviolet degradation, resistance to attack by moisture and tolerance to thermal cycling.

In addition, the coating composition benefits from improved processing conditions. A spray-coated polyurea coating composition may be applied and cured to a tack-free state within a matter of seconds or a few minutes, instead of the many hours needed for polyurethanes to cure. As such, additional factory footprint surplus to the standard paint-booth for topcoat application would not be needed. Hence, a polyurea LEP coating could be applied within the standard paint-booth footprint, with negligible or no impact on throughput. Furthermore, the issue of moisture contamination and ambient humidity which is a major concern in the processing of polyurethane based LEP coatings would be non-existent due to the rapid curing of polyurea; the opportunity for water to influence the curing reaction is removed. The polyurea chemistry is also tolerant of temperature variation during application giving similar cure speed and quality over a range of temperatures, e.g. between 0°C and 35°C. These properties also make polyureas very suitable as an in-service repair coating/recoating system.

Polyurea is formed by the polymerisation reaction of a polyisocyanate and a polyamine thereby generating urea linkages (-HN-C(O)-NH-), for example, as shown in the scheme below.

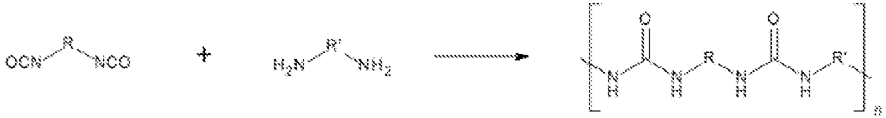

### Coating composition

In exemplary non-claimed embodiments the coating composition has a low volatile organic content (VOC). In exemplary non-claimed embodiments the coating composition has a VOC of less than 250g/L. In exemplary non-claimed embodiments the coating composition has a VOC of less than 100, 50, 10, 5 or lg/L. The VOC may be determined in accordance with ASTM D 2369-81, 87, 90, 92, 93, or 95.

### Polyisocyanate resin

Isocyanate is the functional group -N-C=O so a polyisocyanate is an organic compound having at least two isocyanate groups, such as two isocyanate groups (di-isocyanate) or three isocyanate groups (tri-isocyanate).

The polyisocyanate resin may consist of a single polyisocyanate. In exemplary non-claimed embodiments the polyisocyanate resin consists of a single polyisocyanate and the polyisocyanate is a di-isocyanate. Alternatively the polyisocyanate resin may consist of a mixture of two or more polyisocyanates, such as two, three or four polyisocyanates.

In exemplary non-claimed embodiments the polyisocyanate resin comprises a di-isocyanate and/or a tri-isocyanate.

Suitable diisocyanates include isophorone diisocyanate (IPDI), an isomeric mixture of 2,2,4- and 2,4,4- trimethyl hexamethylene diisocyanate, hexamethylene diisocyanate, (HDI), methylene bis (4-cyclohexylisocyanate) (H12 MDI) and 1,6-hexamethylene diisocyanate.

Suitable trifunctional isocyanates include trimers of isophorone diisocyanate, triisocyanato nonane, and isocyanurates of hexamethylene diisocyanate.

In exemplary non-claimed embodiments the polyisocyanate resin comprises alicyclic isocyanates, particularly isocyanurates of diisocyanates such as hexamethylene diisocyanate and isophorone diisocyanate.

The polyisocyanate resin comprises aliphatic polyisocyanate(s), such as an aliphatic di-isocyanate. An aliphatic polyisocyanate resin is a polyisocyanate that comprises an aliphatic segment therein.

The polyisocyanate resin may not comprise methylene diphenyl diisocyanate (MDI), an aromatic isocyanate. In exemplary non-claimed embodiments the polyisocyanate resin does not comprise an aromatic isocyanate. Polyureas produced from aromatic isocyanates have poorer UV resistance properties than those produced from aliphatic isocyanates. As such, they may discolour and degrade on exposure to UV/direct sunlight.

An isocyanate or mixture of isocyanates may be described with reference to its isocyanate equivalent weight (NCO eq. wt). This is the number of grams of product to one equivalent of isocyanate ("NCO") reactive groups. The isocyanate group content of the polyisocyanate resin is measurable by titration using di-n-butylamine in accordance with ASTM D2572- 87.

In exemplary non-claimed embodiments the polyisocyanate resin has an isocyanate equivalent weight of no more than 400, 300, 250, 200, 150 or 130g/ equivalent and/or at least 70, 90, 100, 150, 100, 200 or 250g/equivalent.

The polyisocyanate resin may comprise a blend of difunctional and trifunctional isocyanate oligomers with Isocyanate weight range 230-370g/equivalent.

In exemplary non-claimed embodiments the polyisocyanate resin comprises (i) hexamethylene diisocyanate, (ii) isophorone diisocyanate and/or (iii) methylene bis (4-cyclohexylisocyanate). In exemplary non-claimed embodiments the polyisocyanate resin comprises at least 30, 40, 50, 60, 70, 80 or 90wt% i) hexamethylene diisocyanate, (ii) isophorone diisocyanate and/or (iii) methylene bis (4-cyclohexylisocyanate).

In exemplary non-claimed embodiments the polyisocyanate resin comprises or consists of hexamethylene diisocyanate (HDI). HDI has a molar mass of 168.2g/mol. HDI has two isocyanate groups so its isocyanate equivalent weight is 168.2/2 = 134.1g/equivalent. If the HDI is reacted to form a prepolymer (as in the method of the second aspect), then the prepolymer will have a lower isocyanate equivalent value than the starting HDI.

In exemplary non-claimed embodiments the polyisocyanate resin comprises or consists of methylene-bis(4-cyclohexylisocyanate), which has a molar mass of 262.35. This isocyanate has two isocyanate groups so its isocyanate equivalent weight is 262.35/2 = 131.2g/equivalent

In exemplary non-claimed embodiments the polyisocyanate resin comprises or consists of isophorone diisocyanate (IPDI). In exemplary non-claimed embodiments the polyisocyanate resin comprises at least 30, 40, 50, 60, 70, 80 or 90wt% isophorone diisocyanate. IPDI has excellent UV stability, which is especially important when the resulting coating is applied to a wind turbine blade.

IPDI has a molar mass of 222.3g/mol. IPDI has two isocyanate groups so its isocyanate equivalent weight is 222.3/2 = 111.1g/equivalent. If the IPDI is reacted to form a prepolymer (as in the method of the second aspect), then the prepolymer will have a lower isocyanate equivalent value than the starting **IPDI.**

In exemplary non-claimed embodiments the polyisocyanate resin has a number average molar mass of no more than 1000, 800, 600, 500, 400, 250 or 300g/mol and/or at least 100, 150, 200 or 250g/mol. In one exemplary non-claimed embodiment the polyisocyanate resin has a number average molar mass of 200 to 250g/mol.

### Polyamine resin

The polyamine resin comprises two or more aliphatic polyamine(s) having primary and/or secondary amine groups. A polyamine is a compound with two or more amine groups, for example a diamine (two amine groups) or a triamine (three amine groups).

Amine groups may be described as primary, second or tertiary depending on the number of hydrogen substituents. A primary amine has the formula R¹NH₂; a secondary amine has the formula R¹R²NH and a tertiary amine has the formula R¹R²R³N, wherein each of R¹, R² and R³ is independently an alkyl or aryl group that is optionally substituted.

The polyamine resin comprises two or more polyamines having primary and/or secondary amine groups, for example, two, three, four, five, six, seven or eight or more such polyamines. The inventors have determined that a blend of polyamines imparts specific properties on the resulting coating composition that renders it particularly suitable for use as an LEP coating.

In exemplary non-claimed embodiments the polyamine resin does not comprise an aromatic polyamine.

In exemplary non-claimed embodiments the polyamine resin comprises at least one aliphatic polyamine having one or more primary amine groups. In embodiments the polyamine resin comprises an aliphatic polyamine having only primary amine groups i.e. a primary polyamine.

In exemplary non-claimed embodiments the polyamine resin comprises at least one aliphatic polyamine having one or more secondary amine groups. In exemplary non-claimed embodiments the polyamine resin comprises an aliphatic polyamine having only secondary amine groups i.e. a secondary polyamine.

In exemplary non-claimed embodiments the polyamine resin comprises both an aliphatic polyamine having only primary amine groups and an aliphatic polyamine having only secondary amine groups.

A polyamine may be described with reference to its amine equivalent weight. This is the number of grams of product to one equivalent of amine reactive groups with respect to isocyanate. In exemplary non-claimed embodiments the polyamine resin has an amine equivalent weight with isocyanates of at least 60, 150 or 200g/equivalent and/or no more than 3000, 2000, 1000, 700 or 500g/equivalent. Amine value can be determined in accordance with ASTM D 2074.

In exemplary non-claimed embodiments the polyamine resin comprises cyclic and acyclic (i.e. open-chain) polyamines.

In exemplary non-claimed embodiments the aliphatic polyamines having primary and/or secondary amine groups comprise polyether amines. In exemplary non-claimed embodiments the aliphatic polyamines having primary and/or secondary amine groups comprises at least 30, 40, 50, 60, 70, 80 or 90wt% and/or no more than 95, 85 or 75wt% polyether amines.

In exemplary non-claimed embodiments the polyamine resin comprises from 80 to 100wt% polyether amines. In one such exemplary non-claimed embodiment, any remaining amine is aliphatic or cycloaliphatic.

In exemplary non-claimed embodiments the aliphatic polyether amine comprises a primary polyether amine.

In exemplary non-claimed embodiments the aliphatic polyether amine comprises a secondary polyether amine. Examples of aliphatic polyether amines include polyamines having repeat oxypropylene and/or oxyethylene units in the backbone, i.e. polyoxypropylamines and polyoxyethyl amines.

In exemplary non-claimed embodiments the aliphatic polyether amine comprises polyoxypropyldiamine and/or polyoxypropyltriamine.

In exemplary non-claimed embodiments the aliphatic polyether amine comprises polyoxyethyldiamine and/or polyoxyethyltriamine.

In exemplary non-claimed embodiments the polyamine resin comprises polyoxypropyldiamine, such as at least 10, 20, 30 or 40wt% polyoxypropyldiamine and/or no more than 80, 60 or 30wt% polyoxypropy lediamine.

In exemplary non-claimed embodiments the polyamine resin comprises one or more polyaspartic ester amine(s). In exemplary non-claimed embodiments the polyamine resin comprises no more than 50, 30, 20 or 10wt% polyaspartic ester amine and/or at least 5, 10, 15 or 20wt% polyaspartic ester amine(s). In one such exemplary non-claimed embodiment the polyamine resin comprises no polyaspartic ester amine. Polyaspartic ester amine is moisture sensitive so should be used in moderation if at all. Polyaspartic ester amine also slows the polymerisation reaction so reducing or replacing this polyamine can provide benefits in terms of reaction times.

In exemplary non-claimed embodiments the polyamine resin has a number average molar mass of at least 1000, 2000 or 3000g/mol and/or no more than 6000, 5000, 4000, 3000 or 2000g/mol. It will be understood that properties of the polyamine resin refer to the properties of all of the polyamine resin employed in preparing the composition. For example, where the composition is prepared using the method of the second aspect, then polyamine resin may be employed in a second component as well as in a third component. The number average molar mass refers to the total resin from both the second and third components.

In exemplary non-claimed embodiments the aliphatic polyamine(s) having primary and/or secondary amine groups comprise a polyamine having a number average molar mass of at least 100 1000, 2000 or 3000g/mol and/or no more than 6000, 5000, 4000, 3000 or 2000g/mol.

The aliphatic polyamines having primary and/or secondary amine groups are selected to impart specific properties on the resulting coating composition such as hardness, toughness, strength, strain to failure, and flexibility

The aliphatic polyamines comprise a triamine (a trifunctional polyamine) that provides toughness. The inventors have determined that the use of a trifunctional amine imparts toughness to the resulting coating composition. In exemplary non-claimed embodiments the triamine is a primary triamine, such as a primary triamine polyetheramine. Examples include polyetheramines sold under the trade names Jeffamine®T-403, Jeffamine® T3000 and Jeffamine® T5000.

The aliphatic amines comprise a diamine (a difunctional polyamine) that provides flexibility (e.g. low modulus of elasticity and high elongation). The inventors have determined that the use of a difunctional amine imparts flexibility to the resulting coating composition. In exemplary non-claimed embodiments the diamine is a primary or secondary diamine polyetheramine. Examples include polyetheramines sold under the trade name Jeffamine® D230, D400, D205, D-2000, SD-2001and D4000. In exemplary non-claimed embodiments the diamine has a molar mass of at least 2000g/mol.

In exemplary non-claimed embodiments the polyamine resin comprises a polyamine that provides hardness. The inventors have determined that relatively small secondary diamine provide hardness, especially a cycloaliphatic bis (secondary amine) such as Jefflink®136 (Huntsman), or Clearlink 1000 (Dorf Ketal).

The aliphatic polyamines having primary and/or secondary amine groups comprise a first polyamine that provides toughness and a second polyamine that provides flexibility. It will be understood that the first polyamine is different from the second polyamine.

In exemplary non-claimed embodiments the polyamine resin comprises a primary polyether diamine, for example at least 10, 15, 20, 25, 30, 40, 50, or 60wt% primary polyether diamine and/or no more than 70, 60, 50, 40, 30 or 20wt% primary polyether diamine.

In exemplary non-claimed embodiments the polyamine resin comprises a primary polyether triamine, for example at least 5, 10, 15, 20, 25, 30, 40, 50, or 60wt% primary polyether triamine and/or no more than 70, 60, 50, 40, 30, 20 or 15wt% primary polyether triamine.

In exemplary non-claimed embodiments the polyamine resin comprises a secondary polyether diamine for example at least 5, 10, 15, 20, 25, 30, 40, 50, or 60wt% secondary polyether diamine and/or no more than 70, 60, 50, 40, 30, 20 or 15wt% secondary polyether diamine.

In exemplary non-claimed embodiments the polyamine resin comprises a cycloaliphatic bis (secondary amine), for example at least 5, 10, 15, 20, 25, 30, 40, 50, or 60wt% and/or no more than 70, 60, 50, 40, 30, 20 or 15wt%.

In exemplary non-claimed embodiments the polyamine resin comprises:
(i) a primary polyether diamine, optionally 10 to 40wt% or 20 to 30wt% primary polyether diamine; and/or
(ii) a primary polyether triamine, optionally 10 to 30wt% or 15 to 25wt% primary polyether triamine; and/or
(iii) a secondary polyether diamine, optionally 10 to 30wt% or 15 to 25wt% secondary polyether diamine; and/or
(iv) a cycloaliphatic bis (secondary amine), optionally 10 to 60wt%, 20 to 50wt% or 20 to 40wt% cycloaliphatic bis (secondary amine).

### Ratios

In exemplary non-claimed embodiments the ratio of the polyisocyanate resin to the polyamine(s) having primary and/or secondary amine groups is 10 to 50wt% : 90 to 50wt%, 15 to 40wt% : 85 to 60wt%, or 20 to 30wt%: 80 to 70wt%.

In exemplary non-claimed embodiments the polyisocyanate resin and the polyamine(s) having primary and/or secondary amine groups are present in amounts so that the stoichiometric ratio of isocyanate groups: amine groups is greater than 0.8:1.0, greater than 0.9:1.0, or greater than 1.0:1.0 and/or no more than 2.0:1 .0, no more than 1.5:1, no more than 1.3: 1.0, or no more than 1.2:1. In exemplary non-claimed embodiments the stoichiometric ratio of isocyanate groups: amine groups is from 1:1 to 1.1:1.

In exemplary non-claimed embodiments the polyamine resin comprises a diamine (a difunctional amine) and a trifunctional amine (a triamine). The ratio of the triamine to the diamine may be 75-95wt% diamine to 5-25wt% triamine.

In exemplary non-claimed embodiments the polyisocyanate amine resin comprises a blend of diisocyanate (difunctional isocyanate) and triisocyanate (trifunctional isocyanate). The ratio of the diisocyanate to the triisocyanate may be 75-95wt% diisocyanate to 5-25wt% triisocyanate.

### Additional components

The polyurea coating composition comprises polyurea derived from the polymerisation of a polyisocyanate resin and a polyamine resin. However, it may also comprise various additives e.g. to aid dispersion of the pigments or improve the flow or surface wetting properties of the coating. Such additives are normally incorporated into the polyamine resin. In embodiments the coating composition comprises no more than 50, 25, 20, 15, 10, 5 or 3wt% additives.

In exemplary non-claimed embodiments the coating composition comprises at least one pigment. Wind turbines conventionally have a light grey colour, which may be achieved by a combination of carbon (black) and titanium dioxide (white) for example. The pigment may be mixed with the resins prior to or after polymerisation. i.e. they are incorporated into the component parts.

In exemplary non-claimed embodiments the coating composition comprises at least 1, 2, 5 or 10wt% pigment and/or no more than 50, 25, 15, 10 or 5wt% pigment.

In exemplary non-claimed embodiments the coating composition comprises no more than 3wt% carbon pigment. In exemplary non-claimed embodiments the coating composition comprises at least 3, 5 or 10wt% and/or no more than 50, 20, 10 or 5wt% titanium dioxide.

In exemplary non-claimed embodiments the coating comprises an additive that provides UV absorption, such as hydroxyl phenyl triazine, benzophenone or a hindered amine. Examples include those sold under the Tinuvin® brand.

In exemplary non-claimed embodiments the coating composition comprises an adhesion promotor, such as an aminosilane and/or a thixotrope, such as a hydrophobic silica.

Other fillers may be incorporated into the formulation to enhance the performance. Examples of fillers include finely divided minerals such as barium sulphate, silica, including fumed silica and/or colloidal silica, alumina, kaolin, colloidal alumina, titanium dioxide, zirconia, colloidal zirconia, clay, mica, dolomite, talc, magnesium carbonate, calcium carbonate, calcium sulphate, calcium silicate, and/or calcium metasilicate.

In the absence of matting agents, the resulting coating is glossy, rather than matt.

### Primer

When a droplet of rain impacts the leading-edge protection (LEP) on a turbine blade a shock wave is generated which propagates through the coating. An LEP coating is designed to be able to withstand this wave without failure, and to do this it is formulated to have a high elongation to break 500-1000%. As the pressure wave propagates through the LEP it meets the underlying substrate. The substrate is usually a glass reinforced epoxy laminate with a thin coating of polyurethane paint. This is a low strain capability material with a maximum strain of 3%. When the wave hits the hard and relatively inflexible substrate a proportion of the wave energy gets reflected back into the LEP. This reflected wave produces a large out of plane force at the interface of the substrate and the LEP, that tries to disbond the coating. If the bond strength of the LEP is insufficient, failure will occur at this point. Once the coating has failed at this interface the coating will be unsupported and will quickly degrade further under the onslaught of the rain impingement.

In one exemplary non-claimed embodiment a primer is applied between the substrate (blade) and the polyurea coating, The primer is derived from a polymerisation reaction between a part A and a part B, part A comprising a polyisocyanate resin and part B comprising a blocked polyamine resin and a reactive silane (e.g. an amino silane and/or an epoxy silane). The primer of the present invention is a moisture-activated two component polyurea.

### Part A Composition (isocyanate)

Part A can use a variety of isocyanates either in the form on unreacted grades such as HDI (hexamethylene diisocyanate), IPDI (isophorone diisocyanate), MDI (methylene diphenyl diisocyanate ) or prepolymers of isocyanates can be used.

More specifically, prepolymers based on HDI may be employed. These can be HDI isocyanurate trimer e.g. HDI iminooxadiazinedione; HDI allophanate; HDI uretdione.

The polyisocyanate resin may comprise one or more aliphatic isocyanate(s) as described above. Aromatic isocyanates may also be used in the part A. For example MDI can be used in its liquid form, e.g. a eutectic blend of the 4,4 and the 2,4 isomers. Modified MDI grades may also be used.

Similarly TDI (toluene diisocyanate ) can be used and may be employed in its liquid form, e.g. as a mixture of the 2,4 and 4,4 isomers.

The above-mentioned isocyanates are suitable and they can be used separately or blends can be made of the various grades to obtain optimised balance of properties.

When selecting the isocyanates for part A, the viscosity of the part A should be below 4,000mPas at 25°C and ideally it is below 1,000mPas.

### Part B Composition (blocked amine and amino silane)

The part B is composed primarily of a blocked amine. A blocked amine is an organic compound comprising at least one amino group. A blocked amine may be the reversible reaction product of an amine and another chemical to form a compound which may be dissociated back to its original constituent parts by exposure to other chemicals or stimuli.

The blocked amine may be an aldimine such as a blocked isophorone diamine or a bisaldimine. Many alidimine materials are suitable for the part B. The amine in the aldimine may be selected to have properties suitable for the final film properties for the cured primer, with regard to film hardness, strength and flexibility. Cycloaliphatic amines are suited to this such as isophorone diamine. The blocked amine can also be a ketimine.

The blocked amine may be an aldimine, a ketamine or a cycloaliphatic amine.
It will be understood that an aldimine is an imine that is an analog of an aldehyde and a ketimine is an analog of a ketone.

The second component in part B is an amino silane or an epoxy silane. Silanes are saturated chemical compounds consisting of one or multiple silicon atoms linked to each other or one or multiple atoms of other chemical elements as the tetrahedral centres of multiple single bonds. By definition, cycles are excluded, so that the silanes comprise a homologous series of inorganic compounds with the general formula SiₙH_{2n+2.}

The amino silane may be a primary amino silane. The amino silane may be an amino alkoxy silane.

Many amino/epoxy silanes are suitable for use in Part B, such as gammaglycidoxypropyltrimethoxysilane, gamma-Aminopropyltriethoxysilane and bis-(gamma-Trimethoxysilylpropyl)amine.

When the part A and Part B are mixed together, the mix should have a viscosity of less than 500 mPas. and ideally less than 200mPas. at 25°C. This ensures good wetting and penetration of the substrate.

Polyurea coating used in some applications (for example on porous substrates like concrete) are known and use a one component moisture cured polyurethanes as primers to aid adhesion. These can be solvented or solvent-free.

These known primers have limitations since solvented systems are hazardous due to the volatile solvents and the solvent free systems have low cure speeds resulting in a significant time delay before the coating can be applied, often overnight. This delay is unacceptable for a production process making wind turbine blades.

The primer of the present invention is a moisture-activated two component polyurethane. The part A is mixed with the Part B prior to use. The mixed system may have a pot life of 10 hours. We propose that moisture on the substrate (e.g. blade) and in the air triggers the cure of the primer sufficiently for the application of the LEP coating. The primer may be applied as a thin coating (e.g. 50-150gsm) with a brush or squeegee. The primer may be allowed to tack-off which may take 1.5 hours. It is then overcoated with the LEP coating.

The primer can be overcoated with the polyurea LEP coating system, e.g. brush or spray applied.

The primer may be formulated to have chemical groups, e.g. isocyanate, amine, that can interact with the reactive groups in the LEP coating (eg. isocyanate, amine, hydroxyl,) and form strong chemical bonds.

The mechanical properties of the primer are designed to be intermediate, with regard to strength and strain, to those of the LEP coating and the substrate and thus to mitigate the large difference in properties of the LEP coating and the substrate, and reduce the stresses at the interface of the substrate and the coating system.

We submit that the primer works by a reaction of the blocked amine in part B with moisture on the substrate and in the air, which liberates the amine which then reacts with the isocyanate in part A. The primer also contains an amino-silane in part B which aids the interaction between the coating and any mineral or silcaceous materials in the substrate.

As the primer reacts with moisture it is tolerant of high levels of moisture on the surface. It also will leave a moisture free surface for the LEP to bond to. This surface also has free isocyanate functionality for the LEP coating to interact with and form a strong bond.

The primer has a low viscosity to ensure good surface wetting and is 100% solvent free. This provides an additional benefit over the prior art since solvents are a hazard in the workplace.

The primer may have low levels of residual isocyanate monomer, such as less than 0.5%, typically 0.2%.

The primer may not contain any heavy metal salts, such as mercury and tin, which are commonly used as accelerators in some polyurethane systems.

A preferred coating composition has the following features:
- Blend of difunctional and trifunctional Isocyanate oligomers with Isocyanate weight range 230-370
- Preferred Ratio of difunctional amine (75-95%) to trifunctional amine (5-25wt%)
- Preferred Ratio of difunctional isocyanate (75-95%) to trifunctional isocyanate (5-25wt%)
- Viscosity <1000mPa.s at 25°C, viscosity <100mPa.s at 65°C
- Reactivity - thin film set time >25 seconds but <60 seconds

According to a second aspect of the invention there is provided a method according to claim 12.

The method may comprise
partially polymerising a first component and a second component to form a prepolymer; and
polymerising the prepolymer with a third component to form the coating composition; wherein
the first component comprises an aliphatic polyisocyanate;
the second component comprises (i) a polyol and/or (ii) a first polyamine resin, the first polyamine resin comprising one or more aliphatic polyamine(s) having primary or secondary amine groups; and
the third component comprises a second polyamine resin, the second polyamine resin comprising one or more aliphatic polyamine(s) having primary or secondary amine groups,
wherein the aliphatic polyamines comprise (i) at least one triamine that imparts toughness on the resulting coating; and (ii) at least one diamine that imparts flexibility on the resulting coating.
The method may comprise partially polymerising a first component and a second component to form a prepolymer; and
polymerising the prepolymer with a third component to form the coating composition, wherein
the first component comprises an aliphatic polyisocyanate,
wherein the aliphatic polyisocyanate comprises (i) at least one tri-isocyanate that imparts toughness on the resulting coating; and (ii) at least one di-isocyanate that imparts flexibility on the resulting coating;
the second component comprises (i) a polyol and/or (ii) a first polyamine resin, the first polyamine resin comprising one or more aliphatic polyamine(s) having primary or secondary amine groups; and
the third component comprises a second polyamine resin, the second polyamine resin comprising one or more aliphatic polyamine(s) having primary or secondary amine groups.

The method uses two steps to form the coating composition for the use of the first aspect. The partial polymerisation (also known as a pre-reaction) can take place at a separate location from the subsequent polymerisation i.e. the partial polymerisation takes place in a factory whereas the subsequent polymerisation (to form the polyurea coating) will generally take place where the substrate is coated. This improves safety and processing parameters.

The first polyamine resin and the second polyamine resin together constitute the polyamine resin described in relation to the first aspect. The comments above apply equally here. When analysing a final coating composition it may not be possible to determine whether an amine was part of the second or third component.

### Polyol

A polyol is a compound with multiple hydroxyl functional groups. In exemplary non-claimed embodiments the polyol comprises a polymeric polyol, such as a polyether polyol or a polyester polyol. In exemplary non-claimed embodiments the polyol has a molar mass of at least 1000, 2000 or 3000g/mol.

Suitable polyether polyols include polyether diols, such as polyethylene glycol (e.g. 2000g/mol), polypropylene glycol, and poly(tetramethylene ether) glycol.

Other suitable polyols include neopentyl glycol and butane diol.

An accelerator (e.g. dibutyltinlaurate) is normally used with the polyol in the reaction process to ensure that the slower isocyanate polyol reaction is driven to completion.

### Prepolymer

The prepolymer is formed by the partial reaction of the isocyanate resin and either an amine or a polyol. Both routes will produce a higher molecular weight material which will still contain isocyanate reactive groups that when mixed with the third component will polymerise and form the cured coating. A polyol might provide cost savings and similar performance, as compared to the use of the amine but it would be more complex to make and have less shelf stability.

The nature and the amount of the reactants used to form the prepolymer will affect the properties of the prepolymer and thus the properties of the final cured coating. Generally if more polyol/polyamine resin is used to form the prepolymer, then a prepolymer with a lower final NCO (isocyanate) level will be formed. If less polyol/polyamine resin is used, then a prepolymer with a higher final NCO level will be formed. In exemplary non-claimed embodiments, the isocyanate levels in the prepolymer are generally from 10 to 20%, such as 12 to 16%. They can be measured by titration using di-n-butylamine in accordance with ASTM D2572- 87.

Possible ranges of first and second components to form the prepolymer.

| | | | |
|---|---|---|---|
| First component: | 50 | 44 | 40 |
| polyisocyanate | | | |
| resin, e.g. IPDI | | | |
| Second component: | 50 | 56 | 60 |
| (i) polyol and/or | | | |
| (ii) first polyamine resin, e.g. primary polyether diamine such as Jeffamine® D2000 | | | |
| NCO level% | 16.72 | 14.4 | 12.57 |

The NCO level in the prepolymer will affect the speed of the cure of the coating, with higher NCO levels giving a faster cure. It will also affect the hardness of the resulting coating, with higher NCO levels giving a harder coating.

If amines with a higher functionality than two are used in the second component (e.g. triamines such as Jeffamine® T3000, or T5000), the final coating will be tougher. However if too much triamine is used in the second component it is possible to produce a gel rather than a free flowing liquid. This is undesirable. The inventors propose employing both a triamine and a diamine in the second component to prevent gel formation.

In exemplary non-claimed embodiments the second component comprises a first polyamine resin, which comprises a triamine and a diamine.

In exemplary non-claimed embodiments the second component comprises a first polyamine, which comprises a diamine and no triamine.

The amines used in the second component can be primary diamine (e.g. primary polyoxypropyldiamine, such as Jeffamine® D2000) or secondary diamines (e.g. secondary polyoxypropyldiamine, such as Jeffamine® SD2001). The use of secondary diamines will result in a prepolymer with a lower viscosity due to reduced hydrogen bonding in the final prepolymer. This can be beneficial in spray applications

After the manufacture of the prepolymer it is possible to determine the amount of NCO in the product to ensure that the reaction is complete and all the amine (or OH functionality) has been reacted out. This can be done by titration using di-n-butylamine in accordance with ASTM D2572- 871.

A final stage of vacuum distillation of the prepolymer may be used. This will remove any unreacted pure isocyanate from the material to a level below 1%. This is sometimes required to ensure that operators are not exposed to higher level of airborne free isocyanate during application.

The method can be described with reference to the volumes of the first component and the second component. In exemplary non-claimed embodiments the ratio of the volume of the first component to the volume of the second component is 30 to 60 vol% first component : 70 to 40vol% second component, such as 40 to 50 vol% first component : 60 to 50 vol%.

The method can be described with reference to the masses of the first component and the second component. In one exemplary non-claimed embodiment the ratio of the mass of the first component to the mass of the second component is 30 to 60 wt% first component : 70 to 40wt% second component, such as 40 to 50 wt% first component : 60 to 50 wt% second component or 45 to 55 wt% first component : 55 to 45wt% second component.

The method can be described with reference to the volumes of the prepolymer and third components. In exemplary non-claimed embodiments the ratio of the volume of the prepolymer to the volume of the third component is 40 to 60 vol% prepolymer : 60 to 40vol% third component, such as 45 to 55 vol% prepolymer : 55 to 45 vol% third component.

The method can be described with reference to the masses of the prepolymer and the third component. In exemplary non-claimed embodiments the ratio of the mass of the prepolymer to the mass of the third component is 40 to 60 wt% prepolymer : 60 to 40wt% third component, such as 45 to 55 wt% prepolymer : 55 to 45 wt% third component.

In exemplary non-claimed embodiments the method is carried out in the absence of solvent. Examples of solvents include xylene, aliphatic white spirit solvent, mineral spirits, ketonic solvents, and ester solvents.

It will be understood that the invention also resides in the prepolymer and the coating composition obtainable by the method of the second aspect.

According to a third aspect of the present invention there is provided a kit according to claim 9.

The aliphatic polyamines may comprise at least one triamine that imparts toughness on the resulting coating and at least one diamine that imparts flexibility on the resulting coating.

The aliphatic polyisocyanate may comprise at least one tri-isocyanate that imparts toughness on the resulting coating; and at least one di-isocyanate that imparts flexibility on the resulting coating.

It will be understood that the prepolymer and the third component will be supplied in separate packs, e.g. drums. The prepolymer and the third component can be combined to polymerise and form the polyurea coating composition on demand.

In exemplary non-claimed embodiments the kit does not comprise any solvent.

In exemplary non-claimed embodiments the kit additionally comprises (c) a feeding system to pump the prepolymer and the third component separately from the supply packs (e.g. drums) to the proportioning system; (d) a proportioning and heating system to separately meter the volumes of each component and raise the pressure and temperature in preparation for mixing and spraying; (e) heated hoses to maintain temperature of the components between the proportioning unit and spray gun; and (f) a spray gun incorporating an impingement mixing chamber.

According to an example there is provided a method for protecting a substrate against erosion, the method comprising providing the coating composition obtained by the method of the second aspect;
(i) applying the coating composition to the substrate to form one or more coating layers on the substrate; andallowing the coating composition to harden on the substrate; or
(ii) applying the coating composition to an adhesive film to form one or more coating layers on the adhesive film; allowing the coating composition to harden on the adhesive film; applying the coating to the substrate by means of the adhesive film.

A film adhesive made from "B-staged" epoxy may be employed. B-staged means that the epoxy is only slightly cured, so that it forms a tacky film consistency. This has the advantage that it can be handled in a semi-solid state, stored, applied to the substrate as a film, and cured later by using heat to activate the remainder of the cure reaction.

Applying the coating to the adhesive film may comprise spraying the coating onto the film (e.g. an epoxy film in the B-staged state). There is the additional advantage that the polyurea forms a strong chemical bond with the film since it is still relatively uncured and cross-linking between the polyurea coating and the epoxy adhesive film will occur.

The polyurea coating is allowed to cure on the adhesive film. The combined coating/adhesive film (e.g, epoxy film) may then be stored at low temperature, since this prolongs the life of the B-staged epoxy (the higher the temperature, the more quickly it will "go off", i.e. the cure reaction progresses).

At a blade factory or a wind farm site, the coating/adhesive film can then be removed from the cold storage and applied directly to the substrate (blade leading edge).

The adhesive film (e.g. epoxy film) will still have a very "tacky" consistency so will adhere to the substrate (like sticky tape). Care must be taken to avoid air bubbles entrapped between the film adhesive and substrate, by applying manual pressure from the middle outwards, and gently working the tape down, e.g. with a soft roller. To ensure good consolidation (pressure applied to the adherents) during the cure process, a vacuum bag may be applied around the film and sealed peripherally to the blade. A "breather" layer may be applied between the vacuum bag and the film to ensure even distribution of vacuum pressure. Heat is then applied (up to 80°C), for example by means of an electrical heat blanket, or by constructing a "tent" and forcing hot air across the surface.

The consumables (vacuum bag, breather layer, sealant tape, etc.) may then be removed and discarded. To avoid aero/acoustic disruption, the edge step between the protection film and blade can then be smoothened by applying a polyurea, polyurethane, or other filler and "fairing" smooth around the edges.

The polymerisation reaction of the prepolymer (comprising polyisocyanate) and the third component (comprising polyamine) is very fast. As such the coating composition must be prepared and immediately applied to the substrate/film.

In exemplary non-claimed embodiments the substrate is a wind turbine or part thereof, such as a blade of a wind turbine, or part thereof.

The film may preferably be an epoxy film. Epoxy film adhesives are widely used in the Aerospace, motorsport and marine industries. Preferred adhesive films are those capable of curing to give optimal mechanical properties at curing temperatures </=80°C.

In exemplary non-claimed embodiments the coating composition is applied and/or allowed to harden at an ambient temperature, for example 0 to 35°C. The coating composition is capable of hardening/curing at ambient temperature, such that no artificial heating or UV source is required to effect curing/hardening.

In exemplary non-claimed embodiments the coating composition is applied and/or allowed to harden in an atmosphere having a relative humidity of at least 30, 40, 50, 60, 70, 80, 90 or 95%. The coating composition can be applied and cured at higher humidity than polyurethane based systems.

In exemplary non-claimed embodiments the coating composition is applied to the substrate/film by spraying, for example using air-less high pressure (20-250 bar), pre-heated (55-85°C), impingement mixing spray equipment.

To ensure proper mixing of the prepolymer (part A) and the third component (part B) in the spray impingement mix chamber, the composition may be designed such that viscosities of the two components are as follows:
1. At room temperature (20-25°C, e.g. 25°C) the viscosities of both parts should ideally by less than 2000 mPa.s, e.g. less than 1000mPa.s. in any case, viscosity should not be greater than 3500 mPa.s
2. At the pre-heated application temperature (55-85°C), viscosities of both components should be ideally <100 mPa.S and not greater than 300 mPa.S. The viscosity of both components may be less than 100mPa.s at 65°C.
3. At the pre-heated application temperature (55-85°C), the viscosities of both parts should be ideally the same, with a difference no greater than 150 mPa.s

After impingement mixing, the reaction and thus the viscosity of the mixed composition progresses very rapidly. However care may be taken in the formulation of the composition such that viscosity progression is not too fast. If that is the case, then there can be two problems: 1. the coating may not "wet out" the substrate adequately to establish proper adhesion ; 2. the coating will not have time to "level" or "flow" in order to establish a smooth, glossy surface finish. As we mention elsewhere, one key to controlling this viscosity progression in the formula is in limiting the use of the trifunctional amine. So, this negative effect of the trifunctional amine needs to be balanced with its positive effect on imparting high toughness to the coating.

In exemplary non-claimed embodiments the coating composition is applied using a spray nozzle that is mounted on a buggy. The use of a buggy allows the traverse speed and the distance from nozzle to substrate to be controlled. This helps to achieve a well-controlled thickness distribution of coating on the substrate.

In exemplary non-claimed embodiments the coating composition is applied using one, or multiple, e.g. three or more, spray nozzles, which may be mounted on buggies. The use of multiple nozzles helps achieve a well-controlled, variable thickness coating on a substrate.

In exemplary non-claimed embodiments the coating composition is applied to the substrate to form one or more coating layers, wherein the coating layers have a total maximum thickness of at least 200, 400, 600, 800 or 1000µm and/or no more than 3000, 2000 or 1000µm.

In exemplary non-claimed embodiments the coating composition is applied to the substrate to form one or more coating layers, wherein at least one coating layer has a maximum thickness of at least 100, 200, 300, 400, 500, 600 or 800µm. The coating composition of the present invention does not require a solvent so there are no difficulties with releasing a solvent from the coating, such that thicker coatings can be achieved.

The coating composition may be applied to provide a thin film set time of greater than 25 seconds and less than 60 seconds.

In exemplary non-claimed embodiments the method protects the substrate against erosion where the erosion is solid particle erosion and/or rain erosion.

An improvement in rain erosion resistance is measurable in accordance with in accordance with ASTM G73-10. An improvement in erosion resistance to solid particles is measurable in accordance with ASTM G76 for Particle Erosion Test.

According to an example there is provided a substrate that is coated with the composition of the first aspect.

In exemplary non-claimed embodiments the substrate is a wind turbine or part thereof, such as a blade of a wind turbine, or part thereof.

It will be understood that the coated substrate is producible by the method of the fourth aspect, such that the comments above apply equally here.

According to an example there is provided an erosion resistant aliphatic polyurea coating for a wind turbine blade derived from a polymerisation reaction between a polyisocyanate resin (part A) and a polyamine resin (part B) wherein,
(i) neither part A nor part B contain greater than 2%wt% solvents and,
(ii) part A contains a free isocyanate level less than 0.5%wt%

Both the polyisocyanate resin (part A) and the polyamine resin (part B) may have viscosity profiles suitable for plural component air-less spray application wherein,
(i) at room temperature (20-25°C) the viscosities of both part A and part B are less than 3500 mPa.s;
(ii) at the pre-heated application temperature (55-85°C), viscosities of both part A and part B are not greater than 300 mPa.S; and/or
(iii) at the pre-heated application temperature (55-85°C), the difference in viscosities of part A and part B is less than 150 mPa.s.

Exemplary non-claimed embodiments of the invention will now be described with reference to the following figures in which:
Fig 1 is a schematic diagram of a wind turbine blade that is coated with a coating composition in accordance with an exemplary non-claimed embodiment of the invention; and
Fig 2 is a schematic diagram demonstrating how the coating composition may be applied.

### Example 1 - laboratory scale

A prepolymer was prepared from the ingredients in the table below. The amines were blended together and then added dropwise over 90 minutes to the isocyanate under a nitrogen blanket, using a propeller mixer. The exotherm was controlled by cooling to 40°C. After all the amine had been added the temperature was raised to 60°C, and held there with mixing for a period of 4 hours and then the carbon was added.

**Part A (first and second components)**

| | wt% |
|---|---|
| isophorone diisocyanate (IPDI, hard) | 30-60 |
| primary diamine (flex.) | 30-70 |
| primary triamine (tough) | 10-50 |
| Carbon (pigment) | 0-2 |
| | 100 |

Part B was prepared by blending together the ingredients in the table below using a high speed shearer. The titanium dioxide, silica and any other fillers are incorporated into part B by use of a high-speed dissolver e.g. a Cowles dissolver, under vacuum to ensure dispersion of the pigments and other solid components and an air free mix. A Hegman gauge was used to check that the pigments were fully dispersed (a reading of at least 5 on the Hegman gauge).

**Part B (third component)**

| | wt% |
|---|---|
| secondary diamine (flex) | 0-50 |
| primary triamine (tough) | 0-50 |
| secondary diamine (hard) | 0-50 |
| polyaspartic amine (slow & hard) | 0-50 |
| titanium dioxide (white pigment) | 5-20 |
| hydrophobic silica (thixotrope) | 0-5 |
| aminosilane (adhesion promotor) | 0-2 |
| hydroxy phenyl triazine (UV abs) | 0-3 |
| hindered amine (UV abs) | 0-1.5 |
| | 100 |

Part A (prepolymer) and part B (third component) are combined to generate the polyurea coating composition.

The ratio of part A to the part B is 100 to 94 by weight, 1:1 by volume. This gives an excess of isocyanate of 7%.

The specific blend of amines was selected to obtain properties suitable for use as a coating for a wind turbine blade. The balance of hardness to elongation of the system is governed by the ratio of hard to soft segments and the molecular weight of the soft segments. The IPDI, Jefflink® 136 and polyaspartic amine are hard the other components are soft. Hence, this system has a hard to soft ratio of 94 to 141. The toughness/tear resistance of the system is governed by the amount of trifunctional amine since this gives both elongation and strength. This system can however lead to an early gelation. To get the best abrasion resistance it is important to maximise the amount of the trifunctional amines, as these give the strength whilst still retaining flexibility of the coating. However if too much trifunctional amine is used, the system can suffer from gelation occurring before the system has had time to mix thoroughly in the mix chamber, and/or level completely to give a high gloss surface. The use of a triamine and a diamine helps to avoid this problem.

### Example 2 - Application to substrate

This example is the same as Example 1 except that Jefflink® 136 is used in place of polyaspartic amine. This increases the speed of the reaction.

The coating composition is applied to a substrate (a wind turbine blade) using plural reactor heated spray equipment. This equipment includes a feeder system (a drum for part A and a drum for part B) which is in communication with a proportioning and heating unit. Parts A and B are separately metered in the proportioning and heating unit and delivered via a heated hose to a spray gun having an impingement mix chamber just upstream of the spray nozzle.

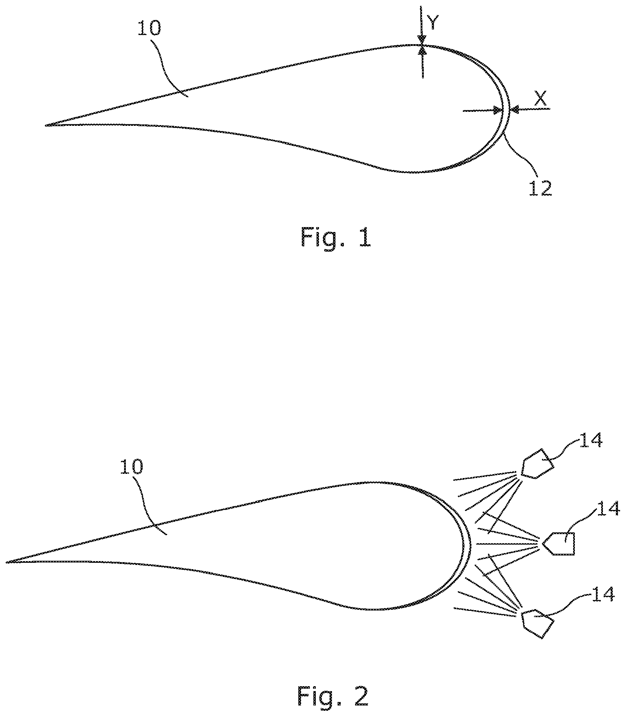

A schematic diagram of the resulting product is shown in figure 1 (not to scale). Referring to figure 1 there is shown a wind turbine blade 10 having a coating 12 of varying thickness. The coating 12 has a maximum thickness x near the leading edge. The maximum thickness is needed for maximum erosion protection, and this could be anywhere from 300 micron up to 3 or 5mm. This is where the brunt of the erosion effect will be since the surface is close to perpendicular to the oncoming wind/rain/sand/etc., hence the impact energy will be highest. As you move along the aerofoil section, the coating is "feathered out", such that the step height of the feather-edge is reduced to a thickness y (no more than 200 micron). In aerodynamics, the edge of the LEP coat would be referred to as a "backwards facing step" and would be present both on the suction-side and pressure-side of the aerofoil, and such steps have a definite effect on the aerodynamic performance. Since we don't want to affect the aerodynamic performance in any appreciable way, a requirement of 200 micron maximum step height would be considered to have a negligible effect.

To achieve a well-controlled, variable thickness film by spray application on a complex geometry component is not trivial. Referring to figure 2 there is shown an improved system having three nozzles 14. The nozzles 14 are each mounted onto a track-driven automated spray buggy so that we can precisely control the traverse speed and distance from nozzle 14 to the substrate (wind turbine blade 10). It is possible to control and actuate the three nozzle positions and angles relative to each other for maximum effect.

### Example 3 - accelerated erosion test

An accelerated rain erosion "helicopter test" (performed at Offshore Renewable Energy Catapult test centre in Blythe) gave the following results:
3M W4600 Polyurethane Coating (control): Time to failure 17 hours
Polyurea Coating (coating described in example 1): Time to failure 14 hours

The 3M coating is the current state-of-art coating on the market for wind blade erosion protection. The coating of the invention provides a useful alternative.

### Example 4 - primer

Examining the failure mode of the example 1 coating revealed a lack of adhesion between the coating and the substrate. A primer was subsequently developed to improve the adhesion, and has shown results of 15MPa SOS (single overlap shear) strength compared to 5MPa without the primer. We then tested the primed coating, which showed a noticeable change in failure mode: much less adhesive failure, and more surface erosion.

**Part A (isocyanate)**

| | Parts |
|---|---|
| Difunctional isocyanate | 60-85 |
| Trifunctional isocyanate | 15-40 |
| Total A | 100 |

**Part B (blocked amine and amino silane)**

| | Parts |
|---|---|
| Blocked amine) | 36-39 |
| Reactive silane (amine/epoxy silane) | 1-4 |
| Total B | 40 |
| | |

| | |
|---|---|
| Total A+B = 140parts. | |

### Performance

The primer adhesion has been evaluated applied to a glass epoxy laminate coating with a typical wind turbine coating, and overcoated with a light stable polyurea coating, giving typically a 3 fold improvement with lap shear strengths increasing from 5.5MPa to 17MPa. Tested to ASTM D5868 using a steel epoxy bonded strip onto the top face of the polyurea coating. The scope of protection is defined by the appended claims.

## Claims

1. Use of a polyurea coating composition to coat a wind turbine blade (10) or part thereof, wherein the coating composition is derived from a polymerisation reaction between a polyisocyanate resin and a polyamine resin,
the polyisocyanate resin comprising one or more aliphatic isocyanate(s) and the polyamine resin comprising one or more aliphatic polyamines having primary and/or secondary amine groups, wherein
(i) the aliphatic polyamine(s) comprises at least one triamine that imparts toughness on the resulting coating (12) and/or the aliphatic isocyanate(s) comprises at least one tri-isocyanate that imparts toughness on the resulting coating (12); and
(ii) the aliphatic polyamine(s) comprises at least one diamine that imparts flexibility on the resulting coating (12) and/or the aliphatic isocyanates(s) comprise at least one di-isocyanate that imparts flexibility on the resulting coating (12).

2. The use of claim 1, wherein the aliphatic polyamines comprise at least one triamine that imparts toughness on the resulting coating and at least one diamine that imparts flexibility on the resulting coating.

3. The use of claim 1, wherein the aliphatic isocyanates comprise (i) at least one tri-isocyanate that imparts toughness on the resulting coating; and (ii) at least one di-isocyanate that imparts flexibility on the resulting coating.

4. The use of any one of the preceding claims, wherein the polyamine resin comprises polyether amine(s), preferably at least 50wt% polyether amine(s); and optionally the polyether amine(s) comprise polyoxypropylamine(s) and/or polyoxyethylamine(s).

5. The use of any one of the preceding claims, wherein the polyamine resin comprises at least one triamine that imparts toughness, the at least one triamine comprising a primary polyether triamine; and/or
the polyamine resin comprises at least one diamine that imparts flexibility, the diamine comprising a primary polyether diamine and/or a secondary polyether diamine.

6. The use of any one of the preceding claims, wherein
(a) the polymerisation reaction (i) does not employ solvent and/or (ii) does not employ polyaspartic ester amine;
(b) at least one diamine imparts flexibility on the resulting coating, the diamine having a number average molar mass of at least 2000g/mol; and/or
(c) the polyamine resin comprises
(i) a primary polyether diamine;
(ii) a primary polyether triamine;
(iii) a secondary polyether diamine; and
(iv) a cycloaliphatic bis (secondary) amine.

7. The use of any one of the preceding claims, comprising at least one di-isocyanate that imparts flexibility on the resulting coating, the di-isocyanate having a number average molar mass of at least 400g/mol.

8. The use of any one of the preceding claims, wherein a primer is applied between the turbine blade (10) and the coating (12), the primer being derived from a polymerisation reaction between a part A and a part B, the part A comprising a polyisocyanate resin and the part B comprising a blocked polyamine resin and an amino silane and/or an epoxy silane.

9. A kit for protecting a substrate against erosion, the kit comprising:
(a) a prepolymer formed from the partial polymerisation of a first component and a second component; and
(b) a third component; wherein
the first component comprises an aliphatic polyisocyanate resin;
the second component comprises (i) a polyol and/or (ii) a first polyamine resin, the first polyamine resin comprising one or more aliphatic polyamine(s) having primary or secondary amine groups; and
the third component comprises a second polyamine resin, the second polyamine resin comprising one or more aliphatic polyamine(s) having primary or secondary amine groups,
wherein
(i) the aliphatic polyamine(s) comprises at least one triamine that imparts toughness on the resulting coating and/or the aliphatic isocyanate(s) comprises at least one tri-isocyanate that imparts toughness on the resulting coating; and
(ii) the aliphatic polyamine(s) comprises at least one diamine that imparts flexibility on the resulting coating and/or the aliphatic isocyanates(s) comprise at least one di-isocyanate that imparts flexibility on the resulting coating.

10. The kit of claim 9, additionally comprising one or more of (c) a feed pump system; (d) a proportioning and heating system; (e) heated hoses; and (f) a spray gun

11. The use or kit of any one of the preceding claims, wherein
(a) the polyisocyanate resin has an isocyanate equivalent weight of no more than 250g/equivalent; and/or
(b) the polyisocyanate resin has a number average molar mass of no more than 500g/mol.

12. A method for protecting a wind turbine blade (10) or part thereof against erosion, such as solid particle erosion and/or rain erosion, the method comprising providing a coating composition;
(i) applying the coating composition to a substrate to form one or more coating layers on the substrate, the substrate comprising a wind turbine blade or part thereof; and allowing the coating composition to harden on the substrate; or
(ii) applying the coating composition to an adhesive film to form one or more coating layers on the adhesive film; allowing the coating composition to harden on the film; and applying the coating to the substrate by means of curing the adhesive film to the substrate;
wherein the coating composition is derived from a polymerisation reaction between a polyisocyanate resin and a polyamine resin,
the polyisocyanate resin comprising one or more aliphatic isocyanate(s) and the polyamine resin comprising one or more aliphatic polyamines having primary and/or secondary amine groups, wherein
(i) the aliphatic polyamine(s) comprises at least one triamine that imparts toughness on the resulting coating and/or the aliphatic isocyanate(s) comprises at least one tri-isocyanate that imparts toughness on the resulting coating; and
(ii) the aliphatic polyamine(s) comprises at least one diamine that imparts flexibility on the resulting coating and/or the aliphatic isocyanates(s) comprise at least one di-isocyanate that imparts flexibility on the resulting coating.

13. The method of claim 12, wherein a primer is applied to the substrate prior to the coating, the primer being derived from a polymerisation reaction between a part A and a part B, the part A comprising a polyisocyanate resin; and the part B comprising a blocked polyamine resin; and an amino silane and/or an epoxy silane.

14. The use of claim 8 or the method of claim 13, wherein the blocked polyamine resin comprises an aldimine, a ketamine and/or a cycloaliphatic amine.

15. A wind turbine blade (10) or part thereof produced by the process of any one of claims 12 to 14.

## Patentansprüche

1. Verwendung einer Polyharnstoff-Beschichtungszusammensetzung zum Beschichten einer Windturbinenschaufel (10) oder eines Teils davon, wobei sich die Beschichtungszusammensetzung von einer Polymerisationsreaktion zwischen einem Polyisocyanatharz und einem Polyaminharz ableitet, wobei das Polyisocyanatharz ein oder mehrere aliphatische Isocyanate umfasst und das Polyaminharz ein oder mehrere aliphatische Polyamine mit primären und/oder sekundären Aminogruppen umfasst, wobei
(i) das aliphatische Polyamin bzw. die aliphatischen Polyamine mindestens ein Triamin, das der resultierenden Beschichtung (12) Zähigkeit verleiht, umfasst bzw. umfassen und/oder das aliphatische Isocyanat bzw. die aliphatischen Isocyanate mindestens ein Triisocyanat, das der resultierenden Beschichtung (12) Zähigkeit verleiht, umfasst bzw. umfassen; und
(ii) das aliphatische Polyamin bzw. die aliphatischen Polyamine mindestens ein Diamin, das der resultierenden Beschichtung (12) Flexibilität verleiht, umfasst bzw. umfassen und/oder das aliphatische Isocyanat bzw. die aliphatischen Isocyanate mindestens ein Diisocyanat, das der resultierenden Beschichtung (12) Flexibilität verleiht, umfasst bzw. umfassen.

2. Verwendung nach Anspruch 1, wobei die aliphatischen Polyamine mindestens ein Triamin, das der resultierenden Beschichtung Zähigkeit verleiht, und mindestens ein Diamin, das der resultierenden Beschichtung Flexibilität verleiht, umfassen.

3. Verwendung nach Anspruch 1, wobei die aliphatischen Isocyanate (i) mindestens ein Triisocyanat, das der resultierenden Beschichtung Zähigkeit verleiht, und (ii) mindestens ein Diisocyanat, das der resultierenden Beschichtung Flexibilität verleiht, umfassen.

4. Verwendung nach einem der vorhergehenden Ansprüche, wobei das Polyaminharz Polyetheramin(e), vorzugsweise mindestens 50 Gew.-% Polyetheramin(e), umfasst und gegebenenfalls das Polyetheramin bzw. die Polyetheramine Polyoxypropylamin(e) und/oder Polyoxyethylamin(e) umfasst bzw. umfassen.

5. Verwendung nach einem der vorhergehenden Ansprüche, wobei das Polyaminharz mindestens ein Triamin, das Zähigkeit verleiht, umfasst, wobei das mindestens eine Triamin ein primäres Polyethertriamin umfasst; und/oder
das Polyaminharz mindestens ein Diamin, das Flexibilität verleiht, umfasst, wobei das Diamin ein primäres Polyetherdiamin und/oder ein sekundäres Polyetherdiamin umfasst.

6. Verwendung nach einem der vorhergehenden Ansprüche, wobei
(a) bei der Polymerisationsreaktion (i) kein Lösungsmittel eingesetzt wird und/oder (ii) kein Polyasparaginsäureesteramin eingesetzt wird;
(b) mindestens ein Diamin der resultierenden Beschichtung Flexibilität verleiht, wobei das Diamin eine zahlenmittlere Molmasse von mindestens 2000 g/mol aufweist; und/oder
(c) das Polyaminharz
(i) ein primäres Polyetherdiamin;
(ii) ein primäres Polyethertriamin;
(iii) ein sekundäres Polyetherdiamin und
(iv) ein cycloaliphatisches bis (sekundäres) Amin
umfasst.

7. Verwendung nach einem der vorhergehenden Ansprüche, umfassend mindestens ein Diisocyanat, das der resultierenden Beschichtung Flexibilität verleiht, wobei das Diisocyanat eine zahlenmittlere Molmasse von mindestens 400 g/mol aufweist.

8. Verwendung nach einem der vorhergehenden Ansprüche, wobei zwischen der Turbinenschaufel (10) und der Beschichtung (12) eine Grundierung aufgebracht wird, wobei sich die Grundierung von einer Polymerisationsreaktion zwischen einem Teil A und einem Teil B ableitet, wobei der Teil A ein Polyisocyanatharz umfasst und der Teil B ein blockiertes Polyaminharz und ein Aminosilan und/oder ein Epoxysilan umfasst.

9. Kit zum Schützen eines Substrats gegen Erosion, wobei das Kit Folgendes umfasst:
(a) ein durch teilweise Polymerisation einer ersten Komponente und einer zweiten Komponente gebildetes Prepolymer und
(b) eine dritte Komponente; wobei
die erste Komponente ein aliphatisches Polyisocyanatharz umfasst;
die zweite Komponente (i) ein Polyol und/oder (ii) ein erstes Polyaminharz umfasst, wobei das erste Polyaminharz ein oder mehrere aliphatische Polyamine mit primären oder sekundären Amingruppen umfasst; und
die dritte Komponente ein zweites Polyaminharz umfasst, wobei das zweite Polyaminharz ein oder mehrere aliphatische Polyamine mit primären oder sekundären Amingruppen umfasst,
wobei
(i) das aliphatische Polyamin bzw. die aliphatischen Polyamine mindestens ein Triamin, das der resultierenden Beschichtung Zähigkeit verleiht, umfasst bzw. umfassen und/oder das aliphatische Isocyanat bzw. die aliphatischen Isocyanate mindestens ein Triisocyanat, das der resultierenden Beschichtung Zähigkeit verleiht, umfasst bzw. umfassen; und
(ii) das aliphatische Polyamin bzw. die aliphatischen Polyamine mindestens ein Diamin, das der resultierenden Beschichtung Flexibilität verleiht, umfasst bzw. umfassen und/oder das aliphatische Isocyanat bzw. die aliphatischen Isocyanate mindestens ein Diisocyanat, das der resultierenden Beschichtung Flexibilität verleiht, umfasst bzw. umfassen.

10. Kit nach Anspruch 9, das zusätzlich eines oder mehrere von (c) einem Speisepumpensystem; (d) einem Proportionierungs- und Erwärmungssystem; (e) erhitzten Schläuchen und (f) einer Spritzpistole umfasst.

11. Verwendung oder Kit nach einem der vorhergehenden Ansprüche, wobei
(a) das Polyisocyanatharz ein Isocyanat-Äquivalentgewicht von nicht mehr als 250 g/Äquivalent aufweist und/oder
(b) das Polyisocyanatharz eine zahlenmittlere Molmasse von nicht mehr als 500 g/mol aufweist.

12. Verfahren zum Schützen einer Windturbinenschaufel (10) oder eines Teils davon gegen Erosion, wie Erosion durch feste Partikel und/oder Regen, wobei das Verfahren Folgendes umfasst:
Bereitstellen einer Beschichtungszusammensetzung;
(i) Aufbringen der Beschichtungszusammensetzung auf ein Substrat zur Bildung einer oder mehrerer Beschichtungsschichten auf dem Substrat, wobei das Substrat eine Windturbinenschaufel oder einen Teil davon umfasst; und Härtenlassen der Beschichtungszusammensetzung auf dem Substrat; oder
(ii) Aufbringen der Beschichtungszusammensetzung auf einen Klebstofffilm zur Bildung einer oder mehrerer Beschichtungsschichten auf dem Klebstofffilm; Härtenlassen der Beschichtungszusammensetzung auf dem Film und Aufbringen der Beschichtung auf das Substrat durch Härten des Klebstofffilms auf dem Substrat;
wobei sich die Beschichtungszusammensetzung von einer Polymerisationsreaktion zwischen einem Polyisocyanatharz und einem Polyaminharz ableitet,
wobei das Polyisocyanatharz ein oder mehrere aliphatische Isocyanate umfasst und das Polyaminharz ein oder mehrere aliphatische Polyamine mit primären und/oder sekundären Amingruppen umfasst,
wobei
(i) das aliphatische Polyamin bzw. die aliphatischen Polyamine mindestens ein Triamin, das der resultierenden Beschichtung Zähigkeit verleiht, umfasst bzw. umfassen und/oder das aliphatische Isocyanat bzw. die aliphatischen Isocyanate mindestens ein Triisocyanat, das der resultierenden Beschichtung Zähigkeit verleiht, umfasst bzw. umfassen; und
(ii) das aliphatische Polyamin bzw. die aliphatischen Polyamine mindestens ein Diamin, das der resultierenden Beschichtung Flexibilität verleiht, umfasst bzw. umfassen und/oder das aliphatische Isocyanat bzw. die aliphatischen Isocyanate mindestens ein Diisocyanat, das der resultierenden Beschichtung Flexibilität verleiht, umfasst bzw. umfassen.

13. Verfahren nach Anspruch 12, bei dem vor der Beschichtung eine Grundierung auf das Substrat aufgebracht wird, wobei sich die Grundierung von einer Polymerisationsreaktion zwischen einem Teil A und einen Teil B ableitet, wobei der Teil A ein Polyisocyanatharz umfasst und der Teil B ein blockiertes Polyaminharz und ein Aminosilan und/oder ein Epoxysilan umfasst.

14. Verwendung nach Anspruch 8 oder Verfahren nach Anspruch 13, wobei das blockierte Polyaminharz ein Aldimin, ein Ketamin und/oder ein cycloaliphatisches Amin umfasst.

15. Windturbinenschaufel (10) oder Teil davon, hergestellt gemäß dem Verfahren nach einem der Ansprüche 12 bis 14.

## Revendications

1. Utilisation d'une composition de revêtement de polyurée pour revêtir une pale d'éolienne (10) ou une partie de celle-ci, la composition de revêtement étant issue d'une réaction de polymérisation entre une résine de polyisocyanate et une résine de polyamine,
la résine de polyisocyanate comprenant un ou plusieurs isocyanates aliphatiques et la résine de polyamine comprenant une ou plusieurs polyamines aliphatiques possédant des groupes amine primaire et/ou secondaire,
(i) la ou les polyamines aliphatiques comprenant au moins une triamine qui confère de la ténacité au revêtement résultant (12) et/ou l'isocyanate ou les isocyanates aliphatiques comprenant au moins un triisocyanate qui confère de la ténacité au revêtement résultant (12) ; et
(ii) la ou les polyamines aliphatiques comprenant au moins une diamine qui confère de la flexibilité au revêtement résultant (12) et/ou l'isocyanate ou les isocyanates aliphatiques comprenant au moins un diisocyanate qui confère de la flexibilité au revêtement résultant (12).

2. Utilisation selon la revendication 1, les polyamines aliphatiques comprenant au moins une triamine qui confère de la ténacité au revêtement résultant et au moins une diamine qui confère de la flexibilité au revêtement résultant.

3. Utilisation selon la revendication 1, les isocyanates aliphatiques comprenant (i) au moins un triisocyanate qui confère de la ténacité au revêtement résultant ; et (ii) au moins un diisocyanate qui confère de la flexibilité au revêtement résultant.

4. Utilisation selon l'une quelconque des revendications précédentes, la résine de polyamine comprenant une ou plusieurs polyéther aminé(s), préférablement au moins 50 % en poids de polyéther amine (s) ; et éventuellement la ou les polyéther amine(s) comprenant une ou plusieurs polyoxypropylamine(s) et/ou polyoxyéthylamine(s).

5. Utilisation selon l'une quelconque des revendications précédentes, la résine de polyamine comprenant au moins une triamine qui confère de la ténacité, l'au moins une triamine comprenant une polyéther triamine primaire ; et/ou la résine de polyamine comprenant au moins une diamine qui confère de la flexibilité, la diamine comprenant une polyéther diamine primaire et/ou une polyéther diamine secondaire.

6. Utilisation selon l'une quelconque des revendications précédentes,
(a) la réaction de polymérisation (i) n'employant pas de solvant et/ou (ii) n'employant pas de poly(ester aspartique) aminé ;
(b) au moins une diamine conférant de la flexibilité au revêtement résultant, la diamine possédant une masse molaire moyenne en nombre d'au moins 2 000 g/mole ; et/ou
(c) la résine de polyamine comprenant
(i) une polyéther diamine primaire ;
(ii) une polyéther triamine primaire ;
(iii) une polyéther diamine secondaire ; et
(iv) une bis-amine (secondaire) cycloaliphatique.

7. Utilisation selon l'une quelconque des revendications précédentes, comprenant au moins un diisocyanate qui confère de la flexibilité au revêtement résultant, le diisocyanate possédant une masse molaire moyenne en nombre d'au moins 400 g/mole.

8. Utilisation selon l'une quelconque des revendications précédentes, un apprêt étant appliqué entre la pale de turbine (10) et le revêtement (12), l'apprêt étant issu d'une réaction de polymérisation entre une partie A et une partie B, la partie A comprenant une résine de polyisocyanate et la partie B comprenant une résine de polyamine bloquée et un amino silane et/ou un époxy silane.

9. Kit pour la protection d'un substrat contre l'érosion, le kit comprenant :
(a) un prépolymère formé à partir de la polymérisation partielle d'un premier composant et d'un deuxième composant ; et
(b) un troisième composant ;
le premier composant comprenant une résine de polyisocyanate aliphatique ;
le deuxième composant comprenant (i) un polyol et/ou (ii) une première résine de polyamine, la première résine de polyamine comprenant une ou plusieurs polyamines aliphatiques possédant des groupes amine primaire ou secondaire ; et
le troisième composant comprenant une deuxième résine de polyamine, la deuxième résine de polyamine comprenant une ou plusieurs polyamines aliphatiques possédant des groupes amine primaire ou secondaire,
(i) la ou les polyamines aliphatiques comprenant au moins une triamine qui confère de la ténacité au revêtement résultant et/ou l'isocyanate ou les isocyanates aliphatiques comprenant au moins un triisocyanate qui confère de la ténacité au revêtement résultant ; et
(ii) la ou les polyamines aliphatiques comprenant au moins une diamine qui confère de la flexibilité au revêtement résultant et/ou l'isocyanate ou les isocyanates aliphatiques comprenant au moins un diisocyanate qui confère de la flexibilité au revêtement résultant.

10. Kit selon la revendication 9, comprenant de plus l'un ou plusieurs parmi (c) un système de pompe d'alimentation ; (d) un système de dosage et de chauffage ; (e) des tuyaux chauffés ; et (f) un pistolet de pulvérisation.

11. Utilisation ou kit selon l'une quelconque des revendications précédentes,
(a) la résine de polyisocyanate possédant un poids équivalent d'isocyanate non supérieur à 250 g/équivalent ; et/ou
(b) la résine de polyisocyanate possédant une masse molaire moyenne en nombre non supérieure à 500 g/mole.

12. Procédé pour la protection d'une pale d'éolienne (10) ou d'une partie de celle-ci contre l'érosion, telle que l'érosion par des particules solides et/ou l'érosion par la pluie, le procédé comprenant la mise à disposition d'une composition de revêtement ;
(i) l'application de la composition de revêtement sur un substrat pour former une ou plusieurs couches de revêtement sur le substrat, le substrat comprenant une pale d'éolienne ou une partie de celle-ci ; et le fait de laisser la composition de revêtement durcir sur le substrat ; ou
(ii) l'application de la composition de revêtement sur un film adhésif pour former une ou plusieurs couches de revêtement sur le film adhésif ; le fait de laisser la composition de revêtement durcir sur le film ; et l'application du revêtement sur le substrat par voie de durcissement du film adhésif sur le substrat ;
la composition de revêtement étant issue d'une réaction de polymérisation entre une résine de polyisocyanate et une résine de polyamine,
la résine de polyisocyanate comprenant un ou plusieurs isocyanates aliphatiques et la résine de polyamine comprenant une ou plusieurs polyamines aliphatiques possédant des groupes amine primaire et/ou secondaire,
(i) la ou les polyamines aliphatiques comprenant au moins une triamine qui confère de la ténacité au revêtement résultant et/ou l'isocyanate ou les isocyanates aliphatiques comprenant au moins un triisocyanate qui confère de la ténacité au revêtement résultant ; et
(ii) la ou les polyamines aliphatiques comprenant au moins une diamine qui confère de la flexibilité au revêtement résultant et/ou l'isocyanate ou les isocyanates aliphatiques comprenant au moins un diisocyanate qui confère de la flexibilité au revêtement résultant.

13. Procédé selon la revendication 12, un apprêt étant appliqué sur le substrat avant le revêtement, l'apprêt étant issu d'une réaction de polymérisation entre une partie A et une partie B, la partie A comprenant une résine de polyisocyanate ; et la partie B comprenant une résine de polyamine bloquée ; et un amino silane et/ou un époxy silane.

14. Utilisation selon la revendication 8 ou procédé selon la revendication 13, la résine de polyamine bloquée comprenant une aldimine, une cétamine et/ou une amine cycloaliphatique.

15. Pale d'éolienne (10) ou partie de celle-ci produite par le procédé selon l'une quelconque des revendications 12 à 14.
